**Europäisches Patentamt**

**European Patent Office**

**Office européen des brevets**

(19)

(11) Veröffentlichungsnummer: **0 135 870**
**A1**

## (12) EUROPÄISCHE PATENTANMELDUNG

(21) Anmeldenummer: **84110651.1**

(22) Anmeldetag: **07.09.84**

(51) Int. Cl.⁴: **H 02 H 6/00**

(30) Priorität: **27.09.83 CH 5219/83**

(43) Veröffentlichungstag der Anmeldung: **03.04.85**
**Patentblatt 85/14**

(84) Benannte Vertragsstaaten: **CH DE FR LI SE**

(71) Anmelder: **BBC Aktiengesellschaft Brown, Boveri & Cie.,**
**Haselstrasse, CH-5401 Baden (CH)**

(72) Erfinder: **Maler, Franz, Dr., Winzerstrasse 42B,**
**CH-5430 Wettingen (CH)**

(54) **Verfahren und Vorrichtung zur Überlastsicherung elektrischer Leistungsverbraucher.**

(57) Bei einem elektrischen Leistungsverbraucher (A) werden der Verbraucherstrom und die Temperatur des am Leistungsverbraucher wirkenden Kühlmittels periodisch gemessen. Die nach jeder Periode gemessenen Werte von Strom und Temperatur werden einer Schaltungsanordnung zugeführt, in der sie zur Nachbildung einer Temperatur nach dem Algorithmus eines thermischen Systems verarbeitet werden. Die nachgebildete Temperatur wird mit einer vorgegebenen Grenztemperatur verglichen, oberhalb derer ein Schalter (B) zur Unterbrechung des Verbraucherstroms betätigt wird. Hierdurch wird der Leistungsverbraucher (A) vor Überlast gesichert. Um nun stets verzögerungsfrei diejenige Stelle des elektrischen Leistungsverbrauchers (A) zu erkennen, welche einer kritischen thermischen Belastung unterworfen ist, wird dem Leistungsverbraucher (A) mindestens ein thermisches System mit jeweils mindestens zwei Systemkörpern (z.B. 1, 2) zugeordnet. Es werden über periodisch ermittelte Verluste und periodisch zugeordnete Werte der Kühlmitteltemperatur sowie über die Wärmekapazitäten und Wärmeleitwerte der Systemkörper die Temperatur jedes der Systemkörper des thermischen Systems ermittelt. Die Temperatur jedes zu überwachenden Systemkörpers wird fortlaufend mit einer Grenztemperatur verglichen. Als zu sichernde Leistungsverbraucher kommen vor allem grosse elektrische Maschinen und Apparate in Frage, welche innerhalb ihrer zugehörigen Temperaturklassen hoch ausgenutzt sind.

115/83

27.9.83

Ka/SC

- 1 -

# Verfahren und Vorrichtung zur Ueberlastsicherung elektrischer Leistungsverbraucher

Die Erfindung bezieht sich auf ein Verfahren zur Ueberlastsicherung elektrischer Leistungsverbraucher gemäss dem Oberbegriff von Patentanspruch 1 und auf eine Vorrichtung zur Durchführung dieses Verfahrens.

Ein derartiges Verfahren und eine derartige Vorrichtung sind aus dem Zeitschriftenaufsatz von E.-F. Knütter und K. Nimes "Elektronischer Ueberlastschutz 7 SK 2" in Siemens-Zeitschrift 50 (1976), Heft 8, S. 551 - 554 bekannt. Hierbei werden Strom- und Umgebungstemperatur eines elektrischen Motors periodisch gemessen und die nach jeder Periode gemessenen Werte von Strom und Temperatur einer elektronischen Schaltungsanordnung zugeführt. In der Schaltungsanordnung werden die gemessenen Werte zur Nachbildung des Temperaturverlaufs des zu schützenden Motors nach dem Algorithmus eines thermischen Systems erster Ordnung verarbeitet. Die solchermassen nachgebildete Temperatur wird fortlaufend mit einer vorgegebenen Auslösetemperatur verglichen, oberhalb welcher ein Abschaltbefehl an den zu schützenden Motor erteilt wird. Beim Betrieb einer elektrischen Maschine entstehen jedoch in den vom Verbraucherstrom durchflossenen Wicklungen und in den vom magnetischen Fluss durchsetzten Teilen des magnetischen Kreises Verluste, welche sich in Abhängigkeit von den den Betriebszustand des Motors kennzeichnenden Grössen, wie z.B. Strom, Spannung, Frequenz der Spannung, ändern. Diese Verluste bedingen unterschiedliche Temperaturanstiege in unterschiedlichen Teilen der Maschine und können mit dem bekannten Verfahren nicht erfasst werden.

Aus dem Zeitschriftenaufsatz von F. Maier "Berechnung von thermischen Ausgleichsvorgängen in rotierenden elektrischen Maschinen" in E und M, 88. Jg. (1971), H. 1, S. 10 - 23 ist es bekannt, das Temperaturverhalten des Rotors einer elektrischen Maschine durch den Algorithmus eines thermischen Systems höherer Ordnung zu erfassen, um so genauere Hinweise bei der Beurteilung einer Motorkonstruktion in thermischer Hinsicht zu erzielen.

Es ist Aufgabe der Erfindung, ein gattungsgemässes Verfahren zur Ueberlastsicherung elektrischer Leistungsverbraucher zu schaffen, mit dem stets verzögerungsfrei diejenige Stelle eines elektrischen Leistungsverbrauchers erkannt wird, welche einer kritischen thermischen Belastung unterworfen ist, und gleichzeitig eine Vorrichtung anzugeben, welche dieses Verfahren in wirtschaftlicher Weise durchführen kann.

Diese Aufgabe wird erfindungsgemäss durch die in den kennzeichnenden Teilen der Patentansprüche 1 und 7 angegebenen Merkmale gelöst. Das erfindungsgemässe Verfahren zeichnet sich dadurch aus, dass aus der Messung leicht erfassbarer Grössen, wie etwa des Verbraucherstroms, der Verbraucherspannung oder der Temperatur des Kühlmittels, sowie aus den den konstruktiven Aufbau und die Kühlung des Leistungsverbrauchers kennzeichnenden, fest vorgegebenen Eingabegrössen die kritischen thermischen Beanspruchungen unterworfenen Stellen des Leistungsverbrauchers verzögerungsfrei ermittelt und geschützt werden können. Durch Auswahl der Betriebsgrössen und geeignete thermische Verknüpfung der einzelnen Systemkörper des dem erfindungsgemässen Verfahren zugrunde liegenden thermischen Modells können unterschiedliche Leistungsverbraucher, wie rotierende Maschinen, Transformatoren oder Stromrichter, vor Ueberlast gesichert werden. Elektrische Motoren können darüber hinaus gleichzeitig auf sicheren Anlauf sowie auf thermische Beanspruchung in Folge einer durch ein unsymmetrisches Drehfeld hervorgerufenen Schieflast überwacht werden.

Die Vorrichtung zur Durchführung des erfindungsgemässen Verfahrens kann in einfacher Weise an den zu schützenden Leistungsverbraucher angepasst werden. Hierzu müssen lediglich durch den konstruktiven Aufbau des zu schützenden Leistungsverbrauchers bestimmte Eingabegrössen, wie etwa die Grenztemperaturen und Wärmekapazitäten verschiedener Teile des Leistungsverbrauchers, und die Wärmeleitwerte zwischen verschiedenen Teilen des Leistungsverbrauchers im Eingabespeicher abgelegt, und die zur Ermittlung der Verluste notwendigen Messgrössen sowie die im Steuer- und Rechenwerk gespeicherten Algorithmen geeignet ausgewählt werden.

Nachfolgend wird ein Aufführungsbeispiel der Erfindung anhand der Zeichnung näher erläutert.

Hierbei zeigt:

Fig. 1    den Aufbau der Systemkörper des Ständers einer Drehfeldmaschine,

Fig. 2    ein den Systemkörpern des Ständers gemäss Fig. 1 zugeordnetes thermisches Ersatzschaltbild,

Fig. 3    ein Funktionsschema einer erfindungsgemässen Einrichtung zur Ueberlastsicherung einer asynchronen Drehfeldmaschine,

Fig. 4   ein den Systemkörpern eines ölgekühlten Transformators zugeordnetes thermisches Ersatzschaltbild,
und

Fig. 5   ein den Systemkörpern eines einseitig gekühlten
Halbleiterventils eines Stromrichters zugeordnetes
thermisches Ersatzschaltbild.

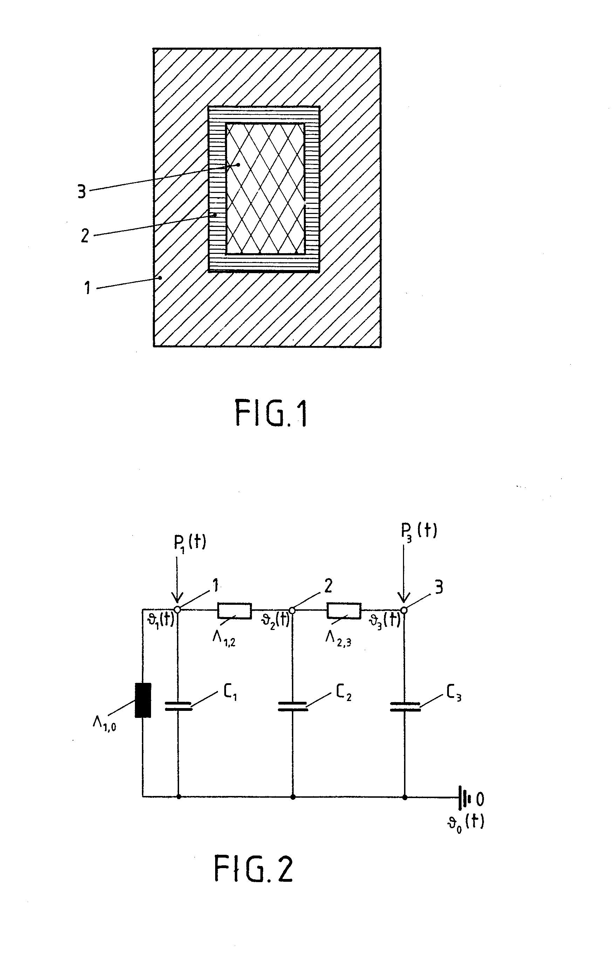

Der in Fig. 1 dargestellte Ständer einer elektrischen
Drehfeldmaschine weist einen Eisenkörper 1 auf, auf welchem eine mit einer Isolation 2 versehene Ständerwicklung
3 aufgebracht ist. Um das Temperaturverhalten eines solchen elektrischen Leistungsverbrauchers unter Betriebsbedingungen physikalisch in guter Näherung zu erfassen,
wird dem Leistungsverbraucher ein thermisches System mit
drei Systemkörpern, nämlich dem Eisenkörper 1, der Isolation 2 und der Ständerwicklung 3, zugeordnet.

Eine thermische Ersatzschaltung für ein derartiges System
ist aus Fig. 2 ersichtlich. In dieser Figur sind die Systemkörper 1, 2 und 3 als kleine Kreise dargestellt. Die Temperaturen der Systemkörper 1, 2 und 3 sind der Reihe nach
$\vartheta_1(t), \vartheta_2(t), \vartheta_3(t)$         . Die Temperatur der Umgebung bzw.
eines Kühlmittels 0 ist $\vartheta_0(t)$   . Die Wärmeleitwerte zwischen
den Systemkörpern 1 und 2 bzw. 2 und 3 sind mit $\Lambda_{12}$
bzw. $\Lambda_{23}$   und zwischen dem Systemkörper 1 und dem Kühlmittel 0 mit $\Lambda_{10}$   bezeichnet. Die Systemkörper 1, 2 und
3 weisen gegenüber der Umgebung bzw. dem Kühlmittel der
Reihe nach die Wärmekapazitäten $C_1, C_2$   und $C_3$   auf.
Am (als Eisenkörper ausgebildeten) Systemkörper 1 treten
Eisenverluste $P_1(t)$   , am (als Ständerwicklung ausgebildeten)
Systemkörper 3 treten Stromwärmeverluste $P_3(t)$   auf.

Auf der Grundlage eines solchen thermischen Systems höherer
Ordnung für die Systemkörper 1, 2 und 3 des Ständers einer
Drehfeldmaschine lässt sich die Temperatur jedes der drei
Systemkörper ermitteln. Hierzu ist es lediglich erforder-

lich, dass die Verluste $P_1(t), P_2(t)$ und $P_3(t)$ der Systemkörper 1, 2 und 3 sowie die Kühlmitteltemperatur $\vartheta_0(t)$ periodisch ermittelt werden, und dass die Temperatur $\vartheta_k(t)$ des Systemkörpers k aus diesen Werten sowie den Wärmekapazitäten und -leitwerten der Systemkörper über einen Algorithmus berechnet wird. Ein geeigneter Algorithmus ergibt sich aus der Gleichgewichtsbedingung zwischen der in einer differentiellen Periode $\Delta t$ entstehenden, gespeicherten und der in dieser Periode abgeführten Energie.

Für ein System mit n (n = 2, 3, ...) Systemkörpern gilt für die Temperatur des Systemkörpers k zum Zeitpunkt $(m+1)\Delta t$

$$\vartheta_{k(m+1)} = \vartheta_{k(m)} + \Delta\vartheta_0 + \frac{\Delta t}{C_k}\left[P_{k(m+1)} + \sum_{i=0}^{n}\Lambda_{i,k}\left(\vartheta_{i(m)} - \vartheta_{k(m)}\right)\right]$$

Hierbei bedeuten $C_k$ die Wärmekapazität des Systemkörpers k,

$P_{k(m+1)}$ den Verlust des Systemkörpers k zum Zeitpunkt $(m+1)\Delta t$ ,

$\Lambda_{ik}$ den Wärmeleitwert zwischen dem Systemkörper i und dem Systemkörper k, wobei i $\neq$ k, $\Lambda_{o,k}$ den Wärmeleitwert zwischen dem Kühlmittel bzw. der Umgebung O und dem Systemkörper k,

$\Delta\vartheta_0 = \vartheta_{0(m+1)} - \vartheta_{0(m)}$ die Differenz der Kühlmitteltemperaturen zu den Zeitpunkten $(m+1)\Delta t$ und $m\Delta t$ ,

$\vartheta_{i(m)}, \vartheta_{k(m)}$ die Temperaturen der Systemkörper i und k zum Zeitpunkt $m\Delta t$ .

Für den Ständer der Drehfeldmaschine ergeben sich somit für den Temperaturverlauf der drei Systemkörper folgende Gleichungen:

$$\vartheta_{1(m+1)} = \vartheta_{1(m)} + \Delta\vartheta_0 + \frac{\Delta t}{C_1} [P_{1(m+1)} + \Lambda_{1,0} (\vartheta_{1(m)} - \vartheta_{0(m)}) + \Lambda_{12} (\vartheta_{1(m)} - \vartheta_{2(m)})]$$

$$\vartheta_{2(m+1)} = \vartheta_{2(m)} + \Delta\vartheta_0 + \frac{\Delta t}{C_2} [\Lambda_{12} (\vartheta_{1(m)} - \vartheta_{2(m)})]$$

$$\vartheta_{3(m+1)} = \vartheta_{3(m)} + \Delta\vartheta_0 + \frac{\Delta t}{C_3} [P_{3(m+1)} + \Lambda_{2,3} (\vartheta_{2(m)} - \vartheta_{3(m)})]$$

Der Verlust $P_1(t)$ im Eisenkörper 1 ist im wesentlichen ein Eisenverlust und errechnet sich bei Anliegen eines symmetrischen Drehfeldes aus der Beziehung

$$P_{1(m+1)} = P_{1(0)} [ (\frac{U_{(m+1)}}{U_N} )^2 (\frac{f_{(m+1)}}{f_N} )^2 ],$$

bei Anliegen eines unsymmetrischen Drehfeldes aus der Beziehung

$$P_{1(m+1)} = P_{1(0)} [ \frac{U_{1(m+1)}^2 + U_{2(m+1)}^2}{U_N^2} (\frac{f_{(m+1)}}{f_N} )^2 ].$$

Hingegen ist der Verlust $P_3(t)$ in der Ständerwicklung 3 im wesentlichen ein Stromwärmeverlust und errechnet sich bei Anliegen eines symmetrischen Drehfeldes aus der Beziehung

$$P_{3(m+1)} = P_{3(0)} \left\{ (\frac{I_{(m+1)}}{I_N} )^2 [1 + \alpha (\vartheta_{3(m)} - \vartheta_{3(0)})] \right\},$$

bei Anliegen eines unsymmetrischen Drehfeldes aus der Beziehung

$$P_{3(m+1)} = P_{3(0)} \frac{I_{1(m+1)}^2 + I_{2(m+1)}^2}{I_N^2} [1 + \alpha (\vartheta_{3(m)} - \vartheta_{3(0)})].$$

Hierbei bedeuten

$P_{3(m+1)}$ bzw. $P_{3(0)}$ die Stromwärmeverluste eines (als Ständerwicklung ausgebildeten) Systemkörpers 3 des Ständers der Drehfeldmaschine bei einem Verbraucherstrom

0135870

des Ständers $I_{(m+1)}$    bzw. bei einem Verbraucherbezugsstrom des Ständers (z.B. Nennstrom) $I_N$  ,

$P_{1(m+1)}$    bzw. $P_{1(0)}$    die Eisenverluste eines (als Eisenkern ausgebildeten) Systemkörpers 1 des Ständers bei einer
Verbraucherspannung des Ständers $U_{(m+1)}$    und einer
Frequenz der Verbraucherspannung des Ständers $f_{(m+1)}$
bzw. bei einer Bezugsspannung des Ständers (z.B. Nennspannung) $U_N$ und Bezugsfrequenz (z.B. Nennfrequenz) $f_N$  ,
$I_{(m+1)}$    den Verbraucherstrom des Ständers zum Zeitpunkt $(m+1)\,\Delta t$ ,

$U_{(m+1)}$    die Verbraucherspannung des Ständers zum Zeitpunkt $(m+1)\,\Delta t$     ,

$I_{1(m+1)}$ , $I_{2(m+1)}$    sowie $U_{1(m+1)}$ , $U_{2(m+1)}$    die
symmetrischen Komponenten des unsymmetrischen Systems
zum Zeitpunkt $(m+1)\,\Delta t$  ,

$f_{(m+1)}$    die Frequenz der Verbraucherspannung des Ständers
zum Zeitpunkt $(m+1)\,\Delta t$    ,

$\vartheta_{i(m)}$    die Temperatur des Systemkörpers i zum Zeitpunkt
$m\,\Delta t$    ,

$\vartheta_{i(0)}$    die Temperatur des Systemkörpers i vor Inbetriebnahme der Drehfeldmaschine,

$\alpha$   den Temperaturbeiwert für Kupfer (z.B. $3{,}7\ldots\ldots 4\cdot 10^{-3}$    ).

Beim Ständer einer Drehstrommaschine lassen sich also
über periodische Messungen des Verbraucherstromes $I\,(t)$ , der
Verbraucherspannung $U(t)$ , der Frequenz der Verbraucherspannung $f(t)$ sowie der Kühlmittel- bzw. Umgebungstemperatur $\vartheta_0(t)$ präzise Aussagen über den Temperaturverlauf
von Systemkörpern, wie beispielsweise der Isolation 2
und der Ständerwicklung 3 machen, ohne dass eine Messung
der Temperatur dieser Systemkörper erforderlich ist.

Ist die Drehfeldmaschine beispielsweise als asynchrone Maschine ausgebildet und mit einem Läufer versehen, auf dessen Eisenkern Kurzschlusswicklungen aufgebracht sind, so kann dem Läufer der Maschine ein zweites thermisches System mit n' Systemkörpern (n' = 2, 3, ...) zugeordnet werden. Für die Erwärmung $\vartheta_{k'(m+1)}$ eines Systemkörpers k' dieses Systems zum Zeitpunkt $(m+1)\Delta t$ gilt dann analog dem dem Ständer zugeordneten thermischen System:

$$\vartheta_{k'(m+1)} = \vartheta_{k'(m)} + \Delta\vartheta_0 + \frac{\Delta t}{C_{k'}} \left[ P_{k'(m+1)} + \sum_{i'=0}^{n'} \Lambda_{i',k'} \left( \vartheta_{i'(m)} - \vartheta_{k'(m)} \right) \right],$$

wobei

$C_{k'}$ die Wärmekapazität des Systemkörpers k',

$\Lambda_{i',k'}$ den Wärmeleitwert zwischen den Systemkörpern i' und k', und

$P_{k'(m+1)}$ den Verlust des Systemkörpers k' zum Zeitpunkt $(m+1)\Delta t$ bedeuten.

Für die Verluste $P_{k'(m+1)}$ bzw. $P_{k'(0)}$ eines (als Kurzschlusswicklung ausgebildeten) Systemkörpers k' des Läufers einer asynchronen Drehfeldmaschine zum Zeitpunkt $(m+1)\Delta t$ bzw. bei einem Läuferbezugsstrom $I_N$ mit kalter Wicklung gilt beim Anliegen eines symmetrischen Drehfeldes

$$P_{k'(m+1)} = P_{k'(0)} \left\{ \left( \frac{\bar{I}_{(m+1)}}{I_N} \right)^2 \left[ 1 + \alpha \left( \vartheta_{k'(m)} - \vartheta_{k'(0)} \right) \right] \right\},$$

wobei $\bar{I}_{(m+1)}$ im wesentlichen durch

$$\bar{I}_{(m+1)} = \frac{I_k}{\sqrt{1 + \left( \frac{S_k}{S_{(m+1)}} \right)^2}}$$

bestimmt ist, und

$I_k$ den Kurzschlussstrom des Läufers bei kalter Wicklung,

$S_k$ den Kippschlupf, und

$S_{(m+1)}$ den Schlupf des Läufers zum Zeitpunkt $(m+1)\Delta t$
bedeuten.

Beim Läufer einer asynchronen Drehfeldmaschine lassen sich also über periodische Messungen der Drehzahl $n(t)$ und der Kühlmittel- bzw. Umgebungstemperatur $\vartheta_0(t)$ präzise Aussagen über den Temperaturverlauf von Systemkörpern, wie etwa der Kurzschlusswicklung des Läufers machen, ohne dass eine Messung der Temperatur dieser Systemkörper erforderlich ist.

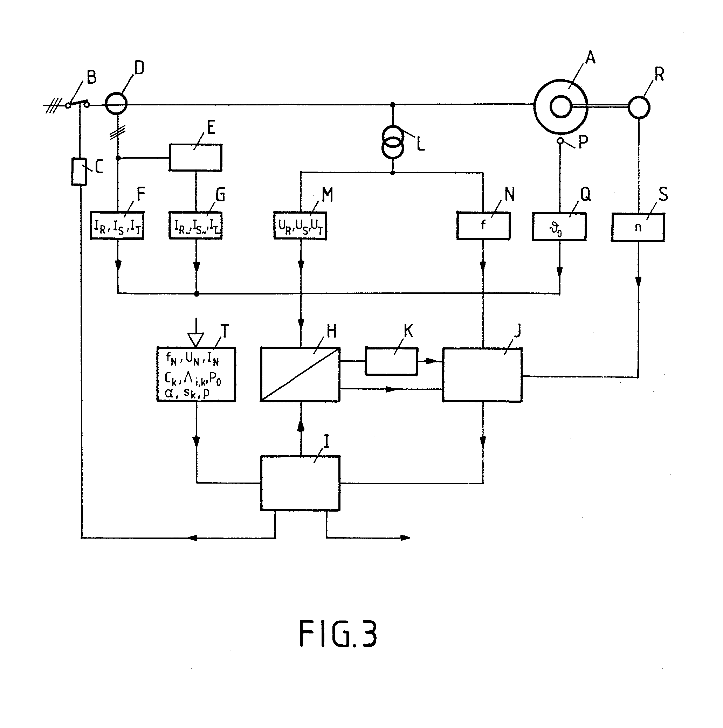

In Fig. 3 ist eine Einrichtung angegeben, mit welcher das erfindungsgemässe Verfahren zum Ueberlastschutz bei einer asynchronen Drehfeldmaschine A durchgeführt werden kann. Die Speisung der Maschine erfolgt dreiphasig über einen Schalter B, welcher von einem Betätigungsorgan C, beispielsweise einem Magneten, geöffnet oder geschlossen werden kann.

Ueber einen Stromwandler D werden die drei Phasenströme ungefiltert und über ein Tiefpassfilter E gleichzeitig gefiltert gemessen. Die Messwerte $I_R$, $I_S$ und $I_T$ der ungefiltert gemessenen Phasenströme werden über einen Messwertgeber F, die Messwerte $I_{R\sim}$, $I_{S\sim}$, $I_{T\sim}$ der gefiltert gemessenen Phasenströme über einen Messwertgeber G einem Analog-Digital-Wandler H zugeführt. Die digitalen Strommesswerte der ungefiltert gemessenen Phasenströme werden nach Abgabe eines von einem Steuer- und Rechenwerk I, beispielsweise einem Mikroprozessor, erzeugten und sich in differentiellen Zeitabständen $\Delta t$ periodisch wiederholenden Speichersignals in einen Speicher J übertragen, wohingegen die digitalen Strommesswerte der gefiltert gemessenen Phasenströme über ein Digitalfilter K geführt und nach Abgabe des Speichersignals im Speicher J abgelegt werden.

0135870

Ueber einen Spannungswandler L werden in einem Messwertgeber M die Phasenspannungen $U_R$, $U_S$, $U_T$ und in einem Messwertgeber N die Frequenz $f$ der Spannung gemessen. Der Messwertgeber N enthält vorzugsweise einen elektronischen Zähler, vor dessen Eingang sich eine von dem Steuer- und Rechenwerk I in einer Messperiode angesteuerte Torschaltung befindet. Die Frequenzwerte werden sodann digital ermittelt und können nach jeder Messperiode direkt in den Messwertspeicher J eingegeben werden. Hingegen ermittelt der Messwertgeber M die Werte der Phasenspannungen analog. Die analogen Spannungssignale werden entsprechend den ungefilterten Stromsignalen im Analog-Digital-Wandler H digitalisiert und nach jeder durch das Steuer- und Rechen-werk I bestimmten Periode $\Delta t$ im Messwertspeicher J abge-legt.

Ein Temperaturfühler P erfasst die Temperatur $\vartheta_0$ der Umgebung bzw. des Kühlmittels und führt sie einem Messwertgeber Q zu. Das vom Messwertgeber Q abgegebene analoge Signal wird im Analog-Digital-Wandler H digitalisiert und entsprechend den Strom-, Spannungs- und Frequenzsignalen nach Abgabe des Speichersignals im Messwertspeicher J abgelegt.

Die Drehzahl n der Maschine A wird über einen Wechselspannungsgeber R und einen Messwertgeber S digital ermittelt und nach jedem Speichersignal unmittelbar dem Messwertspeicher J zugeführt.

Nach der Abgabe eines Speichersignals wird durch das Steuer- und Rechenwerk ein Rechenzyklus eingeleitet. Dabei werden zunächst die zeitlichen Mittelwerte von Frequenz f, Drehzahl n und Temperatur $\vartheta_0$ von Kühlmittel oder Umgebung während einer Zeitperiode $\Delta t$ gebildet. Aus den Messwerten $I_{R-}$, $I_{S-}$ $I_{T-}$ der gefiltert gemessenen Phasenströme werden bei einem unsymmetrischen Drehfeld nach bekannten Rechen-regeln die symmetrischen Komponenten

$$I_1 = (I_{R\sim} + aI_{S\sim} + a^2 I_{T\sim}) \cdot \frac{1}{3}$$

$$I_2 = (I_{R\sim} + a^2 I_{S\sim} + a I_{T\sim}) \cdot \frac{1}{3}$$

mit $a = e^{i 2\pi/3}$

berechnet. Ausserdem werden die Effektivwerte für den ungefilterten Phasenstrom I, die symmetrischen Komponenten $I_1$ und $I_2$ und die Spannung U ermittelt, sowie aus den Messwerten von Drehzahl n und Frequenz f der Schlupf s des Läufers nach der Beziehung

$$s = 1 - \frac{pn}{f},$$

wobei p die Polpaarzahl des Läufers bedeutet.

In einem weiteren Rechenzyklus werden vom Steuer- und Rechenwerk I die zu Berechnung der Temperaturen der zu überwachenden Systemkörper notwendigen Messwerte aus dem Messwertspeicher J sowie einem vorgegebene Grössen, wie Bezugsstrom $I_N$, Wärmekapazitäten $C_1$, $C_2$, ..., Wärmeleit- werte $\Lambda_{1,2} \ldots$ , Nennfrequenz $f_N$, Nennspannung $U_N$, enthaltenden Eingabespeicher T abgerufen und der Temperaturgang der einzelnen Systemkörper in Funktion der Zeit ermittelt. Die ermittelten Temperaturen $\vartheta_k(t)$ der einzelnen Systemkörper k werden fortlaufend mit in dem Eingabespeicher abgelegten Grenztemperaturen für jeden zu überwachenden Systemkörper (z.B. die Statorwicklung der asynchronen Drehfeldmaschine A) verglichen. Ueber- schreitet die Temperatur $\vartheta_k(t)$ eines Systemkörpers k eine vorgegebene Grenztemperatur, so wird zunächst ein den Systemkörper k anzeigendes Alarmsignal ausgelöst und danach durch Abgabe eines Auslösebefehls an das Betätigungsorgan C der Schalter B geöffnet.

Die Erfindung ist nicht nur auf den Ueberlastschutz von elektrischen Maschinen beschränkt, sondern kann auch zur Ueberlastsicherung weiterer Leistungsverbraucher, wie
etwa von Transformatoren oder Stromrichtern, verwendet
werden.

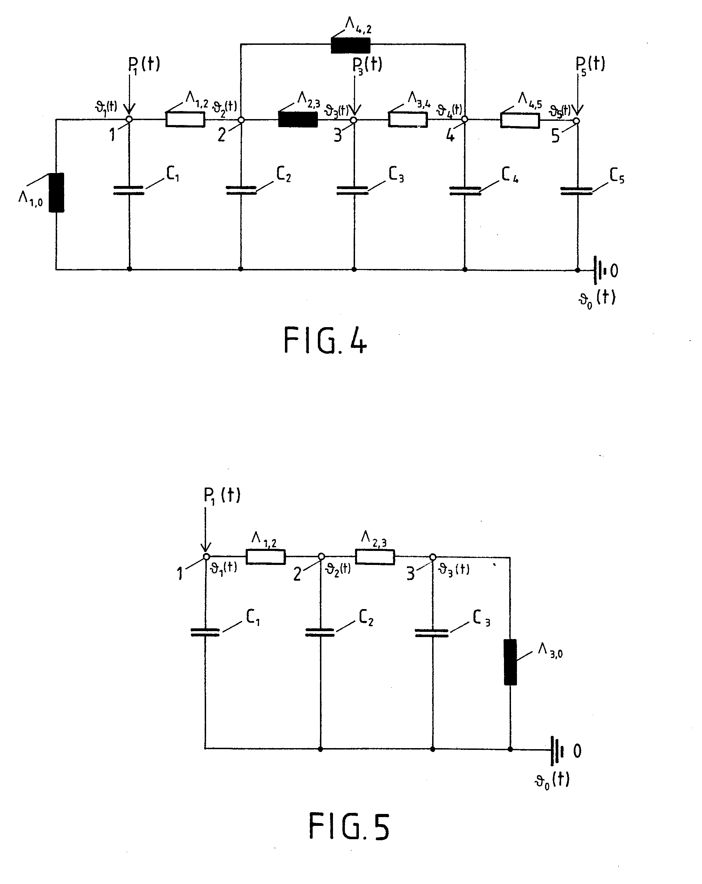

Einem ölgekühlten Transformator lässt sich in guter Näherung das aus Fig. 4 ersichtliche Ersatzschaltbild eines
thermischen Systems fünfter Ordnung zuordnen. In diesem
Ausführungsbeispiel bezeichnen die Systemkörper 1, 2, ...
sowie 5 der Reihe nach einen Kessel, Oel, einen Eisenkörper sowie Wicklungsisolation und Leitermaterial einer
Wicklung. Entsprechend dem Ausführungsbeispiel gemäss
Fig. 1 bezeichnet 0 die Umgebung bzw. das Kühlmittel und
sind mit $\vartheta_i$ , $P_i$ und $C_i$ (i = 1, ..., 5) die Temperaturen,
Verluste und Wärmekapazitäten des Systemkörpers i bezeichnet. $\Lambda_{10}$ , $\Lambda_{1,2}$ , $\Lambda_{2,3}$ , $\Lambda_{3,4}$ , $\Lambda_{4,5}$ , $\Lambda_{4,2}$       bezeichnen
der Reihe nach die Wärmeleitwerte zwischen dem Systemkörper
1 und Kühlmittel, sowie den Systemkörpern 1 und 2, 2 und 3,
3 und 4, 4 und 5, 4 und 2. Die Temperatur $\vartheta_i$  jedes Systemkörpers i dieses Transformators lässt sich algorithmisch
in entsprechender Weise wie die Temperatur jedes Systemkörpers des vorstehend beschriebenen elektrischen Motors
ermitteln, wobei jedoch der Verlust $P_5$ im Zeitpunkt
$(m+1)\Delta t$     im wesentlichen ein Stromwärmeverlust ist
und sich nach der Beziehung

$$P_{5(m+1)} \;=\; P_{5(0)} \;\left(\frac{I_{(m+1)}}{I_N}\right)^2 [\; 1 + \alpha\;(\vartheta_{5(m)} - \vartheta_{5(0)})\,]$$

errechnet, während die Verluste $P_1$ und $P_3$ im Zeitpunkt
$(m+1)\Delta t$     im wesentlichen Eisenverluste sind und sich
nach der Beziehung

$$P_{k(m+1)} \;=\; P_{k(0)} \;\left(\frac{U_{(m+1)}}{U_N}\right)^2, \; k = 1,3$$

errechnen. Hierbei bezeichnen

$P_{5(m+1)}$  den Stromwärmeverlust der Wicklung 5 bei einem Verbraucherbezugsstrom $I_N$ (z.B. Nennstrom), und

$P_{k(m+1)}$  die Eisenverluste eines eisenhaltigen Systemkörpers k (k = 1, 3) bei einer Verbraucherspannung $U_N$ (z.B. Nennspannung).

Bei einem Stromrichter mit Halbleiterventilen kann dem Halbleiterventil mit den grössten Verlusten und schlechtesten Kühlung das thermische System höherer Ordnung zugeordnet werden. Auf diese Weise ist eine Ueberwachung der anderen Halbleiterventile entbehrlich. Einem solchen - beispielsweise einseitig gekühltem - Halbleiterventil kann in guter Näherung das aus Fig. 5 ersichtliche thermische Ersatzschaltbild zugeordnet werden. In diesem Ausführungsbeispiel bezeichnen die Systemkörper 1, 2 und 3 der Reihe nach eine Silizium-Halbleiterscheibe, ein die Silizium-Halbleiterscheibe abstützendes Gehäuse und einen am Gehäuse angebrachten Kühlkörper. Entsprechend den vorangehenden Ausführungsbeispielen bezeichnet 0 die Umgebung bzw. das Kühlmittel. Mit $\vartheta_1$, $\vartheta_2$, $\vartheta_3$ und $C_1$, $C_2$, $C_3$ sind der Reihe nach die Temperaturen und Wärmekapazitäten der System-körper 1, 2, 3 bezeichnet. $P_1$ ist der Verlust der Silizium-Halbleiterscheibe. $\Lambda_{1,2}$, $\Lambda_{2,3}$, $\Lambda_{3,0}$ bezeichnen die Wärmeleitwerte zwischen den Systemkörpern 1 und 2, 2 und 3 sowie zwischen dem Systemkörper 3 und dem Kühlmittel.

Die Temperatur $\vartheta_1$ der Silizium-Halbleiterscheibe lässt sich algorithmisch in entsprechender Weise wie die Temperatur jedes Systemkörpers der vorstehend beschriebenen elektrischen Leistungsverbraucher errechnen, wobei jedoch lediglich die Stromwärmeverluste $P_{1(m+1)}$ der Halb-leiterscheibe 1 zum Zeitpunkt t = $(m+1)\Delta t$ verwendet und nach der Beziehung

$$P_{1(m+1)} = I_{(m+1)} [ I_{(m+1)} R_T + U_{T0} ]$$

ermittelt werden, wobei

$I_{(m+1)}$      der Verbraucherstrom zum Zeitpunkt $(m+1) \Delta t$     ,

$R_T$ der differentielle Widerstand der Kennlinie, und

$U_{TO}$ die Schleusenspannung der Halbleiterscheibe

sind. Hierbei ist die Periode $\Delta t$ kleiner als die kleinste Eigenzeitkonstante des dem Halbleiterventil zugeordneten thermischen Systems.

Patentansprüche

1. Verfahren zur Ueberlastsicherung elektrischer Leistungsverbraucher, bei dem Verbraucherstrom und Temperatur
des am Leistungsverbraucher wirkenden Kühlmittels periodisch gemessen und die nach jeder Periode gemessenen
Werte von Strom und Temperatur einer Schaltungsanordnung zugeführt werden, in der sie zur Nachbildung einer
Temperatur nach dem Algorithmus eines thermischen Systems
verarbeitet werden und die nachgebildete Temperatur
mit einer vorgegebenen Grenztemperatur verglichen wird,
oberhalb derer ein Schalter zur Unterbrechung des Verbraucherstroms betätigt wird, dadurch gekennzeichnet,
dass dem Leistungsverbraucher (z.B. A) mindestens ein
thermisches System mit jeweils mindestens zwei Systemkörpern (z.B. 1, 2) zugeordnet ist, dass die Verluste
(z.B. $P_1$) der Systemkörper des thermischen Systems
periodisch ermittelt werden, dass aus den derart ermittelten Verlusten, dem periodisch zugeordneten Wert
der Kühlmitteltemperatur ($\vartheta_0$) sowie den Wärmekapazitäten (z.B. $C_1$) und Wärmeleitwerten (z.B. $\Lambda_{1,2}$)
der Systemkörper des thermischen Systems die Temperatur
(z.B. $\vartheta_1$) jedes Systemkörpers des thermischen Systems
ermittelt und die derart ermittelte Temperatur jedes
zu schützenden Systemkörpers des thermischen Systems
fortlaufend mit der diesem Systemkörper zugeordneten
Grenztemperatur verglichen wird.

2. Verfahren nach Anspruch 1, dadurch gekennzeichnet,
dass die Temperatur $\vartheta_k$ des k-ten von n (n = 2, 3,
4, ...) Systemkörpern über den Algorithmus der Differenzengleichungen

$$\vartheta_{k(m+1)} = \vartheta_{k(m)} + \Delta\vartheta_0 + \frac{\Delta t}{C_k}\left\{P_{k(m+1)} + \sum_{i=0}^{n}\Lambda_{i,k}[\vartheta_{i(m)} - \vartheta_{k(m)}]\right\}$$

0135870

ermittelt wird, wobei

$\Delta t$    die Periode,

$C_k$    die Wärmekapazität des k-ten Systemkörpers,

$P_{k(m+1)}$    den Verlust des k-ten Systemkörpers zum Zeitpunkt $(m+1)\Delta t$    (m = 0, 1, ...),

$\Lambda_{i,k}$    den Wärmeleitwert zwischen dem i-ten und k-ten Systemkörper,

$\Delta\vartheta_0 = \vartheta_{0(m+1)} - \vartheta_{0(m)}$    die Differenz der Kühlmitteltemperaturen zu den Zeitpunkten $(m+1)\Delta t$   und $m\Delta t$    ,

$\vartheta_{k(m+1)}$    die Temperatur des k-ten Systemkörpers zum Zeitpunkt $(m+1)\Delta t$    , und

$\vartheta_{i(m)}$ , $\vartheta_{k(m)}$    die Temperaturen des i-ten bzw. k-ten Systemkörpers zum Zeitpunkt $m\Delta t$

bedeuten.

3. Verfahren nach Anspruch 2, dadurch gekennzeichnet, dass bei einem als Stromrichter mit Halbleiterventilen ausgebildeten Leistungsverbraucher dem Halbleiterventil mit den grössten Verlusten und der schlechtesten Kühlung ein thermisches System mit mindestens zwei Systemkörpern zugeordnet wird, und dass als Verluste ($P_1$) lediglich die Stromwärmeverluste der Halbleiterscheibe (Systemkörper 1) dieses Halbleiterventils verwendet und nach der Beziehung

$$P_{k(m+1)} = I_{(m+1)} \left[ I_{(m+1)} R_T + U_{T0} \right]$$

bestimmt werden, wobei

$P_{k(m+1)}$     der Stromwärmeverlust der Halbleiterscheibe zum Zeitpunkt $(m+1)\Delta t$ ,

$I_{(m+1)}$     der Verbraucherstrom zum Zeitpunkt $(m+1)\Delta t$ ,

$R_T$ der differentielle Widerstand der Kennlinie, und

$U_{T0}$ die Schleusenspannung der Halbleiterscheibe sind,

und die Periode $\Delta t$ kleiner als die kleinste Eigenzeitkonstante des dem Halbleiterventil zugeordneten thermischen Systems ist.

4. Verfahren nach Anspruch 2, dadurch gekennzeichnet, dass bei einem als Transformator ausgebildeten Leistungsverbraucher mit auf einem Eisenkern befindlichen Wicklungen zusätzlich die Verbraucherspannung periodisch ermittelt wird, und dass als Verluste die Stromwärme und die Eisenverluste des Transformators verwendet und nach der Beziehung

$$P_{i(m+1)} = P_{i(0)} \left\{ \left(\frac{I_{(m+1)}}{I_N}\right)^2 [1 + \alpha(\vartheta_{i(m)} - \vartheta_{i(0)})] \right\}$$

$$P_{k(m+1)} = P_{k(0)} \left(\frac{U_{(m+1)}}{U_N}\right)^2$$

ermittelt werden, wobei

$P_{i(m+1)}$     die Stromwärmeverluste eines (als Wicklung ausgebildeten) Systemkörpers i des Transformators bei einem Verbraucherstrom $I_{(m+1)}$     bzw. bei einem Verbraucherbezugsstrom $I_N$,

$P_{k(m+1)}$     die Eisenverluste eines (als Eisenkern ausgebildeten) Systemkörpers k des Transformators bei einer Verbraucherspannung $U_{(m+1)}$     bzw. bei einer Verbraucherbezugsspannung $U_N$,

$I_{(m+1)}$     den Verbraucherstrom zum Zeitpunkt $(m+1)\,\Delta t$     ,

$U_{(m+1)}$     die Verbraucherspannung zum Zeitpunkt $(m+1)\,\Delta t$     ,

$\vartheta_{i(m)}$     die Temperatur des Systemkörpers i zum Zeitpunkt $m\,\Delta t$     ,

$\vartheta_{i(0)}$     die Temperatur des Systemkörpers i vor Inbetriebnahme des Transformators, und

$\alpha$     den Temperaturbeiwert (z.B. $3,7 \ldots 4\cdot 10^{-3}$     )

bedeuten.

5. Verfahren nach Anspruch 2, dadurch gekennzeichnet, dass bei einem als Drehfeldmaschine ausgebildeten Leistungsverbraucher mit einem Ständer, auf dessen Eisenkern eine Ständerwicklung aufgebracht ist, und dem ein erstes thermisches System mit jeweils mindestens zwei Systemkörpern zugeordnet ist, zusätzlich die Verbraucherspannung und die Frequenz der Verbraucherspannung ermittelt werden, und dass als Verluste lediglich die Stromwärme- und Eisenverluste des Ständers verwendet und bei Anliegen eines symmetrischen Drehfeldes an der Ständerwicklung nach den Beziehungen

$$P_{i(m+1)} = P_{i(0)} \left\{ (\frac{I_{(m+1)}}{I_N})^2 [\, 1 + \alpha \, ( \vartheta_{i(m)} - \vartheta_{i(0)} )] \right\}$$

sowie

$$P_{k(m+1)} = P_{k(0)} \; (\frac{U_{(m+1)}}{U_N})^2 (\frac{f_{(m+1)}}{f_N})^2$$

und bei Anliegen eines unsymmetrischen Drehfeldes an der Ständerwicklung nach den Beziehungen

$$P_{i(m+1)} = P_{i(0)} \frac{I_{1(m+1)}^2 + I_{2(m+1)}^2}{I_N^2} \left[ 1 + \alpha \left( \vartheta_{i(m)} - \vartheta_{i(0)} \right) \right]$$

sowie

$$P_{k(m+1)} = P_{k(0)} \frac{U_{1(m+1)}^2 + U_{2(m+1)}^2}{U_N^2} \left( \frac{f_{(m+1)}}{f_N} \right)^2$$

ermittelt werden, wobei

$P_{i(m+1)}$      bzw.   $P_{i(0)}$      die Stromwärmeverluste eines (als Ständerwicklung ausgebildeten) Systemkörpers i des Ständers der Drehfeldmaschine bei einem Verbraucherstrom des Ständers $I_{(m+1)}$      bzw. bei einem Verbraucherbezugsstrom des Ständers $I_N$, und

$P_{k(m+1)}$      bzw.   $P_{k(0)}$      die Eisenverluste eines (als Eisenkern ausgebildeten) Systemkörpers k des Ständers bei einer Verbraucherspannung des Ständers $U_{(m+1)}$ und einer Frequenz der Verbraucherspannung des Ständers $f_{(m+1)}$      bzw. einer Bezugsspannung des Ständers $U_N$ und Bezugsfrequenz $f_N$,

$I_{(m+1)}$      den Verbraucherstrom des Ständers zum Zeitpunkt $(m+1) \Delta t$      ,

$U_{(m+1)}$      die Verbraucherspannung des Ständers zum Zeitpunkt $(m+1) \Delta t$      ,

$I_{1(m+1)}$            , $I_{2(m+1)}$      sowie $U_{1(m+1)}$      , $U_{2(m+1)}$ die symmetrischen Komponenten des unsymmetrischen Drehstromsystems zum Zeitpunkt $(m+1) \Delta t$      ,

$f_{(m+1)}$      die Frequenz der Verbraucherspannung des Ständers zum Zeitpunkt $(m+1) \Delta t$      ,

$\vartheta_{i(m)}$    die Temperatur des Systemkörpers i zum Zeitpunkt $m \Delta t$      ,

$\vartheta_{i(0)}$    die Temperatur des Systemkörpers i vor Inbetriebnahme der Drehfeldmaschine, und

$\alpha$  den Temperaturbeiwert (z.B. $3,7.....4 \cdot 10^{-3}$      )

bedeuten.

6. Verfahren nach Anspruch 5, dadurch gekennzeichnet,
   dass bei einer asynchronen Drehfeldmaschine mit einem
   Läufer, auf dessen Eisenkern Kurzschlusswicklungen
   aufgebracht sind, und dem ein zweites thermisches System
   mit jeweils mindestens zwei Systemkörpern zugeordnet
   ist, zusätzlich der Schlupf ermittelt wird, und dass
   als Verluste des Läufers die Stromwärmeverluste des
   Läufers verwendet und bei Anliegen eines symmetrischen
   Drehfeldes nach der Beziehung

$$P_{k'(m+1)} \quad = \quad P_{k'(0)} \left\{ (\frac{\bar{I}_{(m+1)}}{\bar{I}_N})^2 \left[ 1 + \alpha \left( \vartheta_{k'(m)} - \vartheta_{k'(0)} \right) \right] \right\}$$

ermittelt werden, wobei

$$\bar{I}_{(m+1)} \quad = \quad \frac{I_k}{\sqrt{1 + (\frac{s_k}{s_{(m+1)}})^2}}$$

und

$P_{k'(m+1)}$      bzw.  $P_{k'(0)}$      die Stromwärmeverluste
eines (als Kurzschlusswicklung ausgebildeten) Systemkörpers $k'$ des Läufers zum Zeitpunkt $(m+1) \Delta t$      bzw.
bei einem Läuferbezugsstrom $\bar{I}_N$   ,

$\bar{I}_{(m+1)}$      den Verbraucherstrom des Läufers zum Zeitpunkt $(m+1) \Delta t$      ,

$S_{(m+1)}$      den Schlupf des Läufers zum Zeitpunkt
$(m+1)\,\Delta t$   ,


$I_k$ den Kurzschlussstrom des Läufers bei kalter Wicklung, und


$s_k$ dem Kippschlupf


bedeuten.


7. Vorrichtung zur Durchführung des Verfahrens nach Patentanspruch 1 mit einer Schaltungsanordnung zur Ermittlung des Temperaturverlaufs des Leistungsverbrauchers unter Berücksichtigung des Verbraucherstroms und der Kühlmitteltemperatur und zur Abgabe eines Befehls an den Schalter (B) zwecks Unterbrechung des Verbraucherstroms, dadurch gekennzeichnet, dass die Schaltungsanordnung ein die Ermittlung des Verlustes und der Temperatur jedes Systemkörpers des thermischen Systems höherer Ordnung durchführendes Steuer- und Rechenwerk (I) aufweist mit zwei vom Steuer- und Rechenwerk (I) abrufbaren Speichern, von denen ein erster (J) zur Ablage von digitalisierten Werten von Messgrössen (z.B. Verbraucherstrom) dient, welche den Betriebszustand des Leistungsverbrauchers (z.B. Asynchronmotor A) charakterisieren, und von denen ein zweiter (T) zur Ablage von den konstruktiven Aufbau des Leistungsverbrauchers bestimmenden, digitalisierten Eingabegrössen (z.B. Nennstrom $I_N$) vorgesehen ist.


8. Vorrichtung nach Anspruch 7, dadurch gekennzeichnet, dass erste Messwertgeber (z.B. F) zur Erzeugung von messgrössenanalogen Signalen vorgesehen sind, welche über einen Analog-Digital-Wandler (H) mit dem Messwertspeicher (J) in Verbindung stehen, und welche zur Uebermittlung von messgrössenanalogen Signalen von Verbraucherstrom und Kühlmitteltemperatur sowie gegebenenfalls von Verbraucherspannung dienen.

9. Vorrichtung nach Anspruch 8, dadurch gekennzeichnet, dass zwischen Analog-Digital-Wandler (H) und Messwertspeicher (J) ein Digital-Filter (K) vorgesehen ist, über welches gefiltert gemessene Phasenströme des Verbraucherstromes geführt sind.

10. Vorrichtung nach Anspruch 7, dadurch gekennzeichnet, dass zweite Messwertgeber (z.B. N) zur Erzeugung digitaler Messgrössensignale vorgesehen sind, welche unmittelbar mit dem Messwertspeicher (J) in Verbindung stehen, und über welche zur Uebermittlung der digitalen Messgrössensignale von Frequenz der Verbraucherspannung und/oder Drehzahl eines als Asynchronmaschine (A) ausgebildeten Leistungsverbrauchers dienen.

FIG.1

FIG.2

FIG.3

FIG. 4

FIG. 5

0135870

Europäisches Patentamt

**EUROPÄISCHER RECHERCHENBERICHT**

Nummer der Anmeldung

EP 84 11 0651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | FR-A-2 526 599 (CANADIAN GENERAL ELECTRIC) * Seite 3, Zeile 26 - Seite 5, Zeile 13; Figur * | 1,2,7, 8,10 | H 02 H 6/00 |
| Y | | 3-6,9 | |
| X | DE-A-2 732 922 (KLÖCKNER-MÖLLER) * Insgesamt * | 1 | |
| Y | BULL. ASE/UCS, Band 67, Nr. 8, 17, April 1976, Seiten 400-406; H. UNTERWEGER: "Thermische Abbilder zum Schutz von Niederspannungsmotoren" * Abschnitt 3: "Das thermische Verhalten von Kurzschlussläufer-Asynchronmotoren" * | 1,5,6 | |
| Y | IEEE 1982, IECON PROCEEDINGS, 15.-19. November 1982, Seiten 66-71, Palo Alto, USA; H. NAITOH et al.: "Microprocessor-based overload protection for motor drives" * Einleitung; Seite 67, linke Spalte, Zeilen 14-68, linke Spalte, Zeile 6 * | 1,4-6, 9 | RECHERCHIERTE SACHGEBIETE (Int. Cl.4)<br><br>H 02 H |

-/-

Der vorliegende Recherchenbericht wurde für alle Patentansprüche erstellt.

| Recherchenort DEN HAAG | Abschlußdatum der Recherche 29-10-1984 | Prüfer KOLBE W.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 107 123 (GUTT) <br> * Insgesamt * | 1,4-6 | |
| Y | US-A-4 117 527 (DEMAREST) <br> * Spalte 3, Zeile 35 - Spalte 4, Zeile 38 * | 3 | |
| A | GB-A-2 075 291 (EL-FI) <br><br> * Figur 2; Ansprüche 3-5 * | 1,4-6, 9 | |
| A | DE-A-2 936 319 (LICENTIA) <br><br> * Ansprüche 1-4 * | 1,4-6, 9 | |
| | ----- | | |
| | | | RECHERCHIERTE SACHGEBIETE (Int. Cl.4) |

Der vorliegende Recherchenbericht wurde für alle Patentansprüche erstellt.

| Recherchenort <br> DEN HAAG | Abschlußdatum der Recherche <br> 29-10-1984 | Prüfer <br> KOLBE W.H. |
|---|---|---|